# EUROPÄISCHE PATENTANMELDUNG

(11) **EP 3 943 345 A1**
(43) Veröffentlichungstag der Anmeldung: **26.01.2022**
(21) Anmeldenummer: 21159511.1
(22) Anmeldetag: 26.02.2021
(51) Int. Cl.: B60R 25/24

(54) **BETÄTIGUNGSSYSTEM FÜR EIN BEWEGLICHES TEIL EINES FAHRZEUGES**

(30) Priorität: 21.07.2020 DE 102020119252
(71) Anmelder: Huf Hülsbeck & Fürst GmbH & Co. KG, 42551 Velbert (DE)
(72) Erfinder: Schindler, Mirko, 42549 Velbert (DE)
(74) Vertreter: Patentanwälte Bals & Vogel

(57) **Zusammenfassung**

Die Erfindung betrifft ein Betätigungssystem (100) für ein bewegliches Teil (102) eines Fahrzeuges (101) in Form eines Zugangssystems, aufweisend:
A) ein benutzerseitiges mobiles Gerät (10), mit einem Bewegungssensor (11), wobei der Bewegungssensor (11) dazu ausgeführt ist, mindestens eine bestimmte Bewegungssequenz (S) des benutzerseitigen mobilen Gerätes (10) zu erfassen, und einer benutzerseitigen Sendeeinheit (12), wobei die benutzerseitige Sendeeinheit (12) dazu ausgeführt ist, die mindestens eine erfasste Bewegungssequenz (S) auszusenden, und
B) eine fahrzeugseitige Empfangseinheit (20), wobei die fahrzeugseitige Empfangseinheit (20) dazu ausgeführt ist, die erfasste Bewegungssequenz (S) zu empfangen,
und wobei die fahrzeugseitige Empfangseinheit (20) dazu ausgeführt ist, entsprechend der erfassten Bewegungssequenz (S) einen bestimmten Vorgang (V) am beweglichen Teil (102) einzuleiten.

## Beschreibung

Die Erfindung betrifft ein Betätigungssystem für ein bewegliches Teil, insbesondere eine Tür oder eine Klappe, eines Fahrzeuges, vorzugsweise in Form eines Zugangssystems zu einem Fahrzeuginnenraum oder einem Funktionsraum oder einem Funktionselement des Fahrzeuges nach dem unabhängigen Vorrichtungsanspruch. Ferner betrifft die Erfindung ein Verfahren zum Betätigen eines beweglichen Teils, insbesondere einer Tür oder einer Klappe, eines Fahrzeuges nach dem unabhängigen Verfahrensanspruch.

Betätigungssysteme für bewegliche Teile von Fahrzeugen, wie z. B. Türen oder eine Klappen sind grundsätzlich bekannt. Moderne Betätigungssysteme können außerdem dazu ausgeführt sein, bestimmte Bewegungen des Benutzers oder eines Körperteils (eines Fußes oder einer Hand) des Benutzers zu erfassen und entsprechende Vorgänge, wie z. B. berührungsloses Öffnen der Tür oder Klappe auszulösen. Bei modernen Betätigungssystemen werden hierzu komplexe Sensoreinheiten sowie Auswert- und Steuerelektroniken benötigt. Bei manchen Fahrzeugmodellen werden unterschiedlichen Versionen und/oder Ausstattungen angeboten, die zum Teil solche Betätigungssysteme unterstützen können. Dadurch steigt bei manchen Fahrzeugmodellen der Kostenfaktor. Andere Fahrzeugmodelle dagegen können die vorteilhafte Funktionalität nicht bieten.

Es ist daher die Aufgabe der vorliegenden Anmeldung, ein verbessertes Betätigungssystem für ein bewegliches Teil, insbesondere eine Tür oder eine Klappe, eines Fahrzeuges bereitzustellen, welches einfach und kostengünstig ausgeführt ist, welches eine verbesserte Funktionalität aufweist, und welches ein verbesserte, kundenfreundliche, bequeme und intuitive Betätigung des beweglichen Teils ermöglicht. Insbesondere ist es die Aufgabe der vorliegenden Anmeldung, ein verbessertes Betätigungssystem für ein bewegliches Teil, insbesondere eine Tür oder eine Klappe, eines Fahrzeuges bereitzustellen, welches eine flexible, erneuerungsfähige Versionierung ermöglicht, und welches die verbesserte Funktionalität des Betätigungssystems zumindest zum Teil von der Ausstattung der fahrzeugseitigen Sensoreinheiten sowie Auswert- und Steuerelektroniken entkoppelt. Zudem ist es die Aufgabe der Erfindung, ein verbessertes Verfahren zum Betätigen eines beweglichen Teils, insbesondere einer Tür oder einer Klappe, eines Fahrzeuges bereitzustellen.

Die erfindungsgemäße Aufgabe wird durch ein Betätigungssystem für ein bewegliches Teil, insbesondere eine Tür oder eine Klappe, eines Fahrzeuges, vorzugsweise in Form eines Zugangssystems zu einem Fahrzeuginnenraum oder einem Funktionsraum des Fahrzeuges nach dem unabhängigen Vorrichtungsanspruch gelöst. Zudem wird die erfindungsgemäße Aufgabe durch ein entsprechendes Verfahren zum Betätigen eines beweglichen Teils, insbesondere einer Tür oder einer Klappe, eines Fahrzeuges nach dem unabhängigen Verfahrensanspruch gelöst. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Betätigungssystem beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Die Erfindung stellt gemäß dem ersten Aspekt ein Betätigungssystem für ein bewegliches Teil, insbesondere eine Tür oder eine Klappe, eines Fahrzeuges, vorzugsweise in Form eines Zugangssystems zu einem Fahrzeuginnenraum oder einem Funktionsraum (wie z. B. Kofferraum) oder einem Funktionselement (wie z. B. Ladestecker) des Fahrzeuges, bereit.

Das Betätigungssystem weist zwei separate Einheiten auf, wobei eine erste Einheit (bzw. Einheit A) auf einem benutzerseitigen mobilen Gerät und die zweite Einheit (bzw. Einheit B) am Fahrzeug bereitgestellt wird. Das Betätigungssystem weist dabei folgende Elemente auf:
Einheit A) ein benutzerseitiges mobiles Gerät, insbesondere in Form eines Mobiltelefons, eines Tabletts, einer Smartwatch, einer Zahlungskarte, eines Smartkleidungsstücks oder Ähnliches, mit:
   mindestens einem Bewegungssensor, insbesondere in Form eines Beschleunigungssensors und/oder eines Gyroskops,
   wobei vorzugsweise der mindestens eine Bewegungssensor zumindest ein 2-dimensionaler bzw. 2D-Bewegungssensor oder ein 3-dimensionaler bzw. 3D-Bewegungssensor ist,
   und wobei der mindestens eine Bewegungssensor dazu ausgeführt ist, mindestens eine bestimmte Bewegungssequenz des benutzerseitigen mobilen Gerätes zu erfassen,
   und einer benutzerseitigen Sendeeinheit,
   wobei die benutzerseitige Sendeeinheit dazu ausgeführt ist, die mindestens eine erfasste Bewegungssequenz, insbesondere mithilfe elektromagnetischer Induktion und/oder elektromagnetischer Wellen, auszusenden,
Einheit B) eine fahrzeugseitige Empfangseinheit,
   wobei die fahrzeugseitige Empfangseinheit dazu ausgeführt ist, die mindestens eine erfasste Bewegungssequenz, insbesondere mithilfe elektromagnetischer Induktion und/oder elektromagnetischer Wellen, zu empfangen,
und wobei die fahrzeugseitige Empfangseinheit dazu ausgeführt ist, entsprechend der erfassten Bewegungssequenz einen bestimmten Vorgang am beweglichen Teil einzuleiten.

Der Erfindungsgedanke liegt dabei darin, dass zumindest die Sensorik und ggf. Auswert- und Steuerelektronik zum Erfassen von Bewegungen aus oder vor dem Fahrzeug ausgelagert wird. Da moderne benutzerseitige mobile Geräte, wie z. B. Mobiltelefone, eine Sensorik und/oder sämtliche Auswert- und Steuerelektronik zum Erfassen von Bewegungen der mobilen Geräte serienmäßig umfassen, kann diese bereits vorhandene Sensorik der mobilen Geräte dazu verwendet werden, unterschiedliche Bewegungssequenzen zu erfassen und ggf. auszuwerten, die für bestimmte Vorgänge am beweglichen Teil vorgesehen sein können. Schließlich braucht das benutzerseitige mobile Gerät nur noch die erfassten Bewegungssequenzen als Rohrdaten oder als bereits ausgewertete Daten, die auf bestimmte Vorgänge am beweglichen Teil hinweisen können, an das Fahrzeug hinschicken. Hierzu kann eine kontaktlose Kommunikationsverbindung zur fahrzeugseitigen Empfangseinheit genutzt werden, die vorzugsweise aus Sicherheitsgründen nur unter einem bestimmten Abstand realisierbar sein kann, wie z. B. eine NFC-Kommunikation. Über die benutzerseitige Sendeeinheit kann nach einem besonderen Vorteil der Erfindung nicht nur die mindestens eine erfasste Bewegungssequenz, sondern auch ein Identifikationscode übermittelt werden, um einen berechtigten Benutzer bei einem Sicherheitssystem des Fahrzeuges auszuweisen.

Als Bewegungssequenzen, die am benutzerseitigen mobilen Gerät erfasst werden können, sind bspw. Wischbewegungen nach links und nach rechts, Rotationsbewegungen oder dergleichen denkbar. Als bestimmte Vorgänge im Sinne der Erfindung, die für unterschiedliche Bewegungssequenzen vorgesehen sein können, sind insbesondere Öffnen, aber auch Schließen sowie ggf. Entriegeln und/oder Verriegeln des beweglichen Teils denkbar.

Da der Benutzer ein solches mobiles Gerät immer parat hat, braucht er auch keine zusätzliche Schlüssel oder ID-Geräte mit sich tragen, die durch das mobile Gerät ersetzt werden. Der Benutzer kann einfach und bequem das mobilen Gerät greifen und mindestens eine bekannte Bewegungssequenz ausführen, die zu einem bestimmten Vorgang, wie z. B. Öffnen, einer Fahrzeugtür, führt. Zugleich braucht der Benutzer vorzugsweise keine weiteren Knöpfe am mobilen Gerät oder dem Fahrzeug drücken, um sich zu beim Fahrzeug identifizieren. Die vom Benutzer am mobilen Gerät eingeleitete Bewegung kann beispielsweise parallel dann durch das bewegliche Teil nachvollzogen werden, z. B. Öffnungsvorgang nach links von dem beweglichen Teil durch Führung des mobilen Geräts nach links (idealerweise vor dem beweglichen Teil). Zweckmäßigerweise wird das bewegliche Teil durch einen Antrieb, z. B. einem Elektromotor oder Linearmotor, angetrieben, um automatisch die Bewegung ausführen zu können.

Bei einer Schiebetür ist es denkbar, dass der Benutzer mit einer Wischbewegung mit dem Mobiltelefon in eine Öffnungsrichtung der Schiebetür ein Verschieben (durch den Antrieb) der Tür in eine Öffnungsposition bewirken kann. Mit einer Wischbewegung in eine andere Richtung kann der Benutzer bspw. bewirken, dass die Schiebetür wieder verschlossen wird.

Auch ist es denkbar, dass der Benutzer durch eine Wischbewegung an einer Kofferraumklappe, einem Tankdeckel oder einer Ladeklappe bewirken kann, dass die entsprechende Klappe geöffnet wird. Eine Betätigung von Fahrzeuggriffen und/oder Außenspiegel mit einer entsprechenden Bewegung mit dem Handy an diesen beweglichen Teilen kann ein Ausfahren von versenkten Griffen und/oder zugeklappten Außenspiegelbewirken.

Eine fahrzeugseitige Empfangseinheit im Sinne der Erfindung kann mit einer Steuervorrichtung und ggf. mindestens einer fahrzeugseitigen Sensoreinheit ausgeführt sein. Die Steuervorrichtung kann die mindestens eine Bewegungssequenz (in Form von Rohdaten oder bereits ausgewerteten Daten) empfangen und einen entsprechenden Vorgang, wie von Benutzer gewünscht, am beweglichen Teil des Fahrzeuges einleiten. Die Steuervorrichtung kann dabei mit einem Sicherheitssystem des Fahrzeuges kommunizieren. Die fahrzeugseitige Sensoreinheit kann bspw. dazu genutzt werden, eine Präsenz und/oder eine Annährung des Benutzers zu erfassen, woraufhin die kontaktlose Kommunikationsverbindung zwischen der benutzerseitigen Sendeeinheit und der fahrzeugseitigen Empfangseinheit aktiviert werden kann.

Sowohl die benutzerseitige Sendeeinheit als auch die fahrzeugseitige Empfangseinheit können als Sende- und/oder Empfangseinheiten ausgeführt sein, um zu senden und/oder zu empfangen. Grundsätzlich könnte es vorteilhaft sein, dass die benutzerseitige Sendeeinheit als eine aktive oder passive Transpondereinheit und die fahrzeugseitige Empfangseinheit als ein aktives oder passives Lesegerät für eine NFC- bzw. RFID-Kommunikation ausgeführt sein können.

Ferner kann die Erfindung bei einem Betätigungssystem für ein bewegliches Teil eines Fahrzeuges vorsehen, dass das benutzerseitige mobile Gerät ein Mobiltelefon, ein Tablett, eine Smartwatch, eine Zahlungskarte und/oder ein Smartkleidungsstück aufweist. Somit kann die Benutzerfreundlichkeit und der Benutzerkomfort auf eine vorteilhafte Weise erhöht und flexibel gestaltet werden. Solche mobilen Geräte sind gewohnte Gegenstände, die Benutzer in täglichen Leben benutzt und die keine Umstände bereiten, um diese mit sich mitzuführen. Eine weitere Funktion zur Betätigung des beweglichen Teils des Fahrzeuges an solchen mobilen Geräten kann den Benutzerkomfort erheblich erhöhen.

Weiterhin kann die Erfindung bei einem Betätigungssystem für ein bewegliches Teils eines Fahrzeuges vorsehen, dass das Betätigungssystem zum Betätigen eines beweglichen Teils des Fahrzeuges in Form einer Tür, insbesondere einer Schiebetür, einer Klappe, einer Tankklappe, einer Ladesteckerklappe, einer Heckklappe, eines Außenspiegels, eines Rückspiegels, eines außenliegenden oder innenliegenden Griffes oder dergleichen ausgeführt ist. Auf diese Weise können die Vorteile der Erfindung für unterschiedliche bewegliche Teile des Fahrzeuges im Innenraum und außerhalb des Fahrzeuges flexibel umgesetzt werden.

Des Weiteren kann die Erfindung bei einem Betätigungssystem für ein bewegliches Teil eines Fahrzeuges vorsehen, dass die fahrzeugseitige Empfangseinheit im oder am beweglichen Teil oder in der Nähe des beweglichen Teils des Fahrzeuges angeordnet ist. Auf diese Weise kann eine intuitive Betätigung des beweglichen Teils ermöglicht werden.

Zudem ist es denkbar, dass die fahrzeugseitige Empfangseinheit im oder am mindestens einem Strukturbauteil des Fahrzeuges angeordnet sein kann, der insbesondere benachbart zum beweglichen Teil angeordnet ist. Im Falle einer Tür kann das Strukturbauteil bspw. eine B-Säule sein. Somit kann der Benutzer unabhängig von der Position des beweglichen Teils immer am gleichen Ort am Strukturbauteil unterschiedliche Vorgänge am beweglichen Teil auslösen. Somit kann eine bequeme Betätigung des beweglichen Teils ermöglicht werden.

Außerdem kann die Erfindung bei einem Betätigungssystem für ein bewegliches Teil eines Fahrzeuges vorsehen, dass der mindestens eine Bewegungssensor mindestens einen Beschleunigungssensor und/oder einen Gyroskop aufweist, wobei insbesondere der Beschleunigungssensor mindestens ein piezoelektrisches Sensorelement, ein mikro-elektro-mechanisches System, einen Dehnungsmessstreifen, einen Neigungssensor, ein Schwingungssensorelement und/oder ein induktives Sensorelement, insbesondere eine LDC-Sensorelement, aufweist. Je nach Ausstattung des mobilen Geräts können unterschiedliche Technologien sowie unterschiedliche Sensoren zum Erfassen der mindestens einen Bewegungssequenz genutzt werden. Ein Beschleunigungssensor kann vorteilhaft sein, um die Richtung der Schwerkraft zu erkennen. Dies kann wichtig sein, um bei Bewegungssequenzen einen Bezug zu einer Fahrzeughochachse bestimmen zu können. Bei einem Gyroskop kann es vorteilhaft sein, eine Rotation unabhängig von der Erdbeschleunigung wahrzunehmen, die bspw. zum Erkennen von Wischbewegungen genutzt werden kann. Gyroskope sind einfache, bauraumsparsame und kostengünstige Elemente. Der Einsatz von Beschleunigungssensoren und Gyroskopen in einer Kombination kann bei der Auswertung von komplizierten Bewegungsabläufen helfen.

Vorteilhafterweise kann der mindestens eine Bewegungssensor im Sinne der Erfindung dazu ausgeführt sein, eine Winkelgeschwindigkeit bzw. Rotation des benutzerseitigen mobilen Geräts um mindestens 2 Achsen, vorzugsweise 3 Achsen (wobei vorzugsweise die 2 oder 3 Achsen jeweils rechtwinklig, wie im kartesischen Koordinatensystem, zueinander angeordnet sind), und/oder die Orientierung des Benutzers zu erfassen. Auf diese Weise können unterschiedliche Bewegungssequenzen festgelegt werden, die auf unterschiedliche gewünschte Vorgänge am beweglichen Teil hinweisen können.

Im Einzelnen kann der mindestens eine Bewegungssensor im Sinne der Erfindung dazu ausgeführt sein, eine erste Bewegungssequenz zu erfassen, die dazu dient, eine Öffnung des beweglichen Teils zu bewirken, und/oder eine zweite Bewegungssequenz zu erfassen, die dazu dient, eine Schließung des beweglichen Teils zu bewirken, und/oder eine dritte Bewegungssequenz zu erfassen, die dazu dient, eine Entriegelung des beweglichen Teils zu bewirken, und/oder eine vierte Bewegungssequenz zu erfassen, die dazu dient, eine Verriegelung des beweglichen Teils zu bewirken. Auf diese Weise können unterschiedliche Vorgänge am beweglichen Teil einfach und bequem ausgelöst werden.

Ferner kann die Erfindung bei einem Betätigungssystem für ein bewegliches Teil eines Fahrzeuges vorsehen, dass die benutzerseitige Sendeeinheit mindestens eine, bspw. aktive oder passive, NFC-Schnittstelle, vorzugsweise in Form einer Transponder-Spule, und/oder eine BLE-Schnittstelle aufweist, und/oder dass die fahrzeugseitige Empfangseinheit mindestens eine, bspw. aktive oder passive, NFC-Schnittstelle, vorzugsweise in Form eines RFID-Lesegeräts, vorzugsweise umfassend zumindest eine NFC-Spule, und/oder eine BLE-Schnittstelle aufweist. Auf diese Weise kann ein kontaktloser Austausch von Daten zwischen dem benutzerseitigen mobilen Gerät und einem Sicherheitssystem des Fahrzeuges ermöglicht werden, welcher über kurze Abstände, bspw. bis maximal 10 cm, durchgeführt werden kann. Auf diese Weise kann ein sicheres Übertragen auch sicherheitsrelevanter und/oder empfindlicher Daten, wie z. D. eines Identifikationscodes, ermöglicht werden.

Weiterhin kann die Erfindung bei einem Betätigungssystem für ein bewegliches Teil eines Fahrzeuges vorsehen, dass die benutzerseitige Sendeeinheit oder eine zusätzliche Sendeeinheit dazu ausgeführt ist, mindestens einen Sicherheitscode, einen Zugangsberechtigungscode und/oder einen Identifikationscode auszusenden. Auf diese Weise kann ermöglicht werden, dass nur ein berechtigter Benutzer, der im Besitz eines gültigen Codes ist, das bewegliche Teil betätigen kann und/oder den Zugang zum Fahrzeuginnenraum erhalten kann.

Des Weiteren kann die Erfindung bei einem Betätigungssystem für ein bewegliches Teil eines Fahrzeuges vorsehen, dass die fahrzeugseitige Empfangseinheit oder eine zusätzliche Empfangseinheit (die mit der zusätzlichen Sendeeinheit des mobilen Gerätes kommuniziert) dazu ausgeführt ist, eine Kommunikationsverbindung, bspw. über eine Steuervorrichtung, mit einem fahrzeugseitigen Sicherheitssystem, einem fahrzeugseitigen Zugangsberechtigungssystem und/oder mindestens einem fahrzeugseitigen Steuergerät aufzubauen, um einen Sicherheitscode, einen Zugangsberechtigungscode und/oder einen Identifikationscode zu überprüfen, und um mindestens einen bestimmten Vorgang am beweglichen Teil einzuleiten, insbesondere nur dann, wenn ein gültiger Sicherheitscode, ein gültiger Zugangsberechtigungscode und/oder ein gültiger Identifikationscode erkannt wurde. Auf diese Weise kann das Betätigungssystem mit dem fahrzeugseitigen Sicherheitssystem in Verbindung gesetzt werden, um die vorteilhafte erfindungsgemäße Funktionalität bereitzustellen.

Zudem kann die Erfindung bei einem Betätigungssystem für ein bewegliches Teil eines Fahrzeuges vorsehen, dass die fahrzeugseitige Empfangseinheit eine Steuervorrichtung und/oder zumindest eine fahrzeugseitige Sensoreinheit, insbesondere zumindest eine kapazitive Sensoreinheit, aufweist, wobei insbesondere die Steuervorrichtung zur Ansteuerung der fahrzeugseitigen Empfangseinheit, insbesondere der NFC-Schnittstelle, und der zumindest einen Sensoreinheit ausgeführt ist. Auf diese Weise kann das Betätigungssystem mit dem fahrzeugseitigen Sicherheitssystem gekoppelt oder einen Teil dessen werden, um die vorteilhafte erfindungsgemäße Funktionalität am Fahrzeug bereitzustellen.

Außerdem kann die Erfindung bei einem Betätigungssystem für ein bewegliches Teil eines Fahrzeuges vorsehen, dass die Steuervorrichtung dazu ausgeführt ist, die zumindest eine fahrzeugseitige Sensoreinheit zu aktivieren, um eine Annährung eines Benutzers zu erfassen, oder die fahrzeugseitige Empfangseinheit zu aktivieren, um eine Bewegungssequenz von der benutzerseitigen Sendeeinheit zu empfangen, insbesondere dann, wenn eine Annährung eines Benutzers durch die zumindest eine fahrzeugseitige Sensoreinheit detektiert wurde. Auf diese Weise kann die Datenkommunikation mit dem Austausch von sicherheitsrelevanten und/oder sensiblen Daten von dem Vorgang entkoppelt werden, der dazu dient, einen potentiellen Benutzer in der Nähe des Fahrzeuges zu erkennen.

Ferner kann die Erfindung bei einem Betätigungssystem für ein bewegliches Teil eines Fahrzeuges vorsehen, dass die Steuervorrichtung dazu ausgeführt ist, einen gleichzeitigen Betrieb der zumindest einen Sensoreinheit und der fahrzeugseitigen Empfangseinheit zu detektieren und/oder zu blockieren. Auf diese Weise kann die Sicherheit im Betrieb des erfindungsgemäßen Betätigungssystems erhöht werden. Auch kann dadurch der Energieverbrauch im Betrieb des erfindungsgemäßen Betätigungssystems gesenkt werden, wobei insbesondere die fahrzeugseitige Empfangseinheit nur dann aktiviert wird, wenn ein potentieller Benutzer erkannt wurde.

Weiterhin kann die Erfindung bei einem Betätigungssystem für ein bewegliches Teil eines Fahrzeuges vorsehen, dass die Steuervorrichtung eine Schalteinheit aufweist, um zwischen einem Betrieb der zumindest einen Sensoreinheit und der fahrzeugseitigen Empfangseinheit, umzuschalten, wobei die Schalteinheit insbesondere in der Steuervorrichtung integriert ist, und/oder wobei die Schalteinheit in einer ersten Stellung zur Energieversorgung der zumindest einen Sensoreinheit und in einer zweiten Stellung zur Energieversorgung der fahrzeugseitigen Empfangseinheit dient. Auf diese Weise kann eine einfache und robuste Umschaltung zwischen dem Betrieb der zumindest einen Sensoreinheit und der fahrzeugseitigen Empfangseinheit ermöglicht werden.

Des Weiteren kann die Erfindung bei einem Betätigungssystem für ein bewegliches Teil eines Fahrzeuges vorsehen, dass die fahrzeugseitige Empfangseinheit zumindest eine fahrzeugseitige Sensoreinheit, insbesondere zumindest eine kapazitive Sensoreinheit, zumindest teilweise umfangsseitig umschließt. Auf diese Weise kann die fahrzeugseitige Empfangseinheit eine Art Abschirmung bereitstellen, wenn die fahrzeugseitige Sensoreinheit im Betrieb ist und die fahrzeugseitige Empfangseinheit deaktiviert ist. Somit kann die Funktionalität der fahrzeugseitigen Empfangseinheit erhöht werden und ein störungsfreier Betrieb der fahrzeugseitigen Sensoreinheit ermöglicht werden.

Zudem kann die Erfindung bei einem Betätigungssystem für ein bewegliches Teil eines Fahrzeuges vorsehen, dass zumindest eine fahrzeugseitige Sensoreinheit, insbesondere zumindest eine kapazitive Sensoreinheit, derart bezüglich der fahrzeugseitigen Empfangseinheit angeordnet ist, um Störungen durch induzierte Wirbelströme zu vermeiden oder zumindest zu reduzieren. Dabei ist es denkbar, dass die kapazitive Sensoreinheit mindestens mehrere Sensorelemente aufweisen kann, welche bspw. kammförmig und/oder rippenförmig angeordnet sein können.

Außerdem kann die Erfindung bei einem Betätigungssystem für ein bewegliches Teil eines Fahrzeuges vorsehen, dass die fahrzeugseitige Empfangseinheit eine nicht-flüchtige Speichereinheit aufweist, in der mindestens ein Sicherheitscode, ein Zugangsberechtigungscode und/oder ein Identifikationscode und/oder andere Daten eines berechtigten Benutzers des Fahrzeuges hinterlegt sind. Auf diese Weise kann das Betätigungssystem ein mehrfunktionales System bilden, welches als ein Sicherheitssystem und/oder als ein Kontrollzugangssystem des Fahrzeuges dienen kann.

Gemäß dem zweiten Aspekt stellt die Erfindung ein Verfahren zum Betätigen eines beweglichen Teils, insbesondere einer Tür oder einer Klappe, eines Fahrzeuges, bereit, vorzugsweise mithilfe eines Betätigungssystems durchgeführt werden kann, welches wie oben beschrieben ausgeführt sein kann. Das Verfahren weist dabei folgende Schritte auf:
- Bereitstellen eines benutzerseitigen mobilen Geräts, insbesondere in Form eines Mobiltelefons, eines Tabletts, einer Smartwatch, einer Zahlungskarte, eines Smartkleidungsstücks oder Ähnliches, mit
   mindestens einem Bewegungssensor, insbesondere in Form eines Beschleunigungssensors und/oder eines Gyroskops,
   wobei vorzugsweise der mindestens eine Bewegungssensor zumindest ein 2D-Bewegungssensor oder ein 3D-Bewegungssensor, ist,
   und einer benutzerseitigen Sendeeinheit,
- Erfassen mindestens einer bestimmten Bewegungssequenz des benutzerseitigen mobilen Gerätes mithilfe des mindestens einen Bewegungssensors des benutzerseitigen mobilen Gerätes,
- Aussenden der erfassten Bewegungssequenz durch die benutzerseitige Sendeeinheit an eine fahrzeugseitige Empfangseinheit, insbesondere mithilfe elektromagnetischer Induktion und/oder elektromagnetischer Wellen,
- Empfangen der erfassten Bewegungssequenz durch die fahrzeugseitige Empfangseinheit, insbesondere mithilfe elektromagnetischer Induktion und/oder elektromagnetischer Wellen,
- Einleiten eines bestimmten Vorganges am beweglichen Teil durch die fahrzeugseitige Empfangseinheit, die entsprechend der erfassten Bewegungssequenz bestimmt wird.

Mithilfe des erfindungsgemäßen Verfahrens werden die gleichen Vorteile erreicht, die oben im Zusammenhang mit dem erfindungsgemäßen Betätigungssystem beschrieben wurden. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

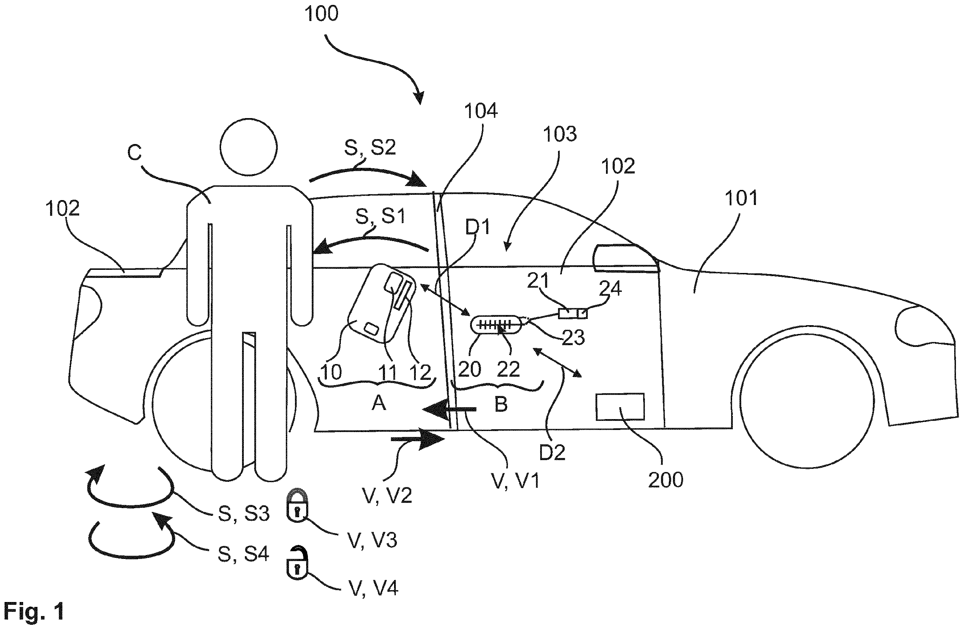

- Figur 1: ein Betätigungssystem für ein bewegliches Teil, insbesondere eine Tür oder eine Klappe, eines Fahrzeuges.

In der nachfolgenden Beschreibung werden für die gleichen technischen Merkmale auch von unterschiedlichen Ausführungsbeispielen die identischen Bezugszeichen verwendet. In der Regel werden die gleichen Bezugszeichen auch von unterschiedlichen Ausführungsbeispielen nur einmal beschrieben.

Die Figur 1 zeigt ein Betätigungssystem 100 im Sinne der Erfindung, welches für ein bewegliches Teil 102, bspw. eine Tür oder eine Klappe, eines Fahrzeuges 101 ausgeführt ist. Das Betätigungssystem 100 dient zum Betätigen des beweglichen Teils 102.

Wenn das bewegliche Teil 102 eine Tür des Fahrzeuges 101, bspw. eine Schiebetür oder eine Schwenktür, ist, kann das Betätigen des beweglichen Teils 102 eine Öffnung V1, eine Schließung V2, eine Verriegelung V3 und/oder ein Entriegelung V4 umfassen. Ähnliche Vorgänge V können auch für das bewegliche Teil 102 in Form einer Klappe, bspw. einer Heckklappe oder Tankklappe oder Ladeklappe, des Fahrzeuges 101 vorgesehen sein. Dabei kann das Betätigungssystem 100 als ein Zugangssystem zu einem Fahrzeuginnenraum 103 oder einem Funktionsraum (bspw. Kofferraum) des Fahrzeuges 101 oder einem Funktionselement (bspw. Ladestecker) dienen.

Im Falle eines Außenspiegels oder eines versenkbaren Türgriffes als das bewegliche Teil 102 des Fahrzeuges 101 können ein Aufklappen und Zuklappen bzw. ein Herausfahren und Versenken als mögliche Vorgänge V vorgesehen sein.

Erfindungsgemäß weist das Betätigungssystem 100 zwei separate Einheiten A, B auf. Eine erste Einheit A ist dabei auf einem benutzerseitigen mobilen Gerät 10 vorgesehen. Eine zweite Einheit B ist ferner am Fahrzeug 101 bereitgestellt. Das Betätigungssystem 100 weist dabei folgende Elemente auf:
Einheit A) ein benutzerseitiges mobiles Gerät 10, bspw. in Form eines Mobiltelefons, eines Tabletts, einer Smartwatch, einer Zahlungskarte, eines Smartkleidungsstücks oder Ähnliches, wobei das benutzerseitige mobile Gerät 10 mit folgenden Komponenten ausgeführt ist:
   mindestens einem Bewegungssensor 11, z. B. in Form eines Beschleunigungssensors und/oder eines Gyroskops, wobei der mindestens eine Bewegungssensor 11 dazu ausgeführt ist, mindestens eine bestimmte Bewegungssequenz S (oder unterschiedliche Bewegungssequenzen S) des benutzerseitigen mobilen Gerätes 10 zu erfassen,
   und einer benutzerseitigen Sendeeinheit 12,
   wobei die benutzerseitige Sendeeinheit 12 dazu ausgeführt ist, die mindestens eine erfasste Bewegungssequenz S, insbesondere mithilfe elektromagnetischer Induktion und/oder elektromagnetischer Wellen, auszusenden,
Einheit B) eine fahrzeugseitige Empfangseinheit 20,
   wobei die fahrzeugseitige Empfangseinheit 20 dazu ausgeführt ist, die mindestens eine erfasste Bewegungssequenz S, insbesondere mithilfe elektromagnetischer Induktion und/oder elektromagnetischer Wellen, zu empfangen,
   und wobei die fahrzeugseitige Empfangseinheit 20 dazu ausgeführt ist, entsprechend der erfassten Bewegungssequenz S einen bestimmten Vorgang A (oder verschiedene Vorgänge A) am beweglichen Teil 102 einzuleiten.

Der mindestens eine Bewegungssensor 11 im Sinne der Erfindung kann als zumindest ein 2D-Bewegungssensor oder ein 3D-Bewegungssensor ausgeführt sein. Mit anderen Worten kann der mindestens eine Bewegungssensor 11 im Sinne der Erfindung dazu ausgeführt sein, eine Winkelgeschwindigkeit bzw. Rotation des benutzerseitigen mobilen Geräts 10 um mindestens 2 Achsen oder 3Achsen zu erfassen. Zudem ist es denkbar, dass Bewegungssensor 11 im Sinne der Erfindung die Orientierung des Benutzers C erfassen kann. Der mindestens eine Bewegungssensor 11 kann mindestens einen Beschleunigungssensor, einen Gyroskop oder eine Kombination aus beiden Sensoren im benutzerseitigen mobilen Gerät 10 aufweisen. Der Beschleunigungssensor kann wiederum mindestens ein piezoelektrisches Sensorelement, ein mikro-elektro-mechanisches System, einen Dehnungsmessstreifen, einen Neigungssensor, ein Schwingungssensorelement und/oder ein induktives Sensorelement, insbesondere eine LDC-Sensorelement, aufweisen. Die Figur 1 zeigt das benutzerseitige mobile Gerät 10 in Form eines Mobiltelefons. Wie oben bereits erwähnt, sind im Rahmen der Erfindung auch andere Ausführungsformen der benutzerseitigen mobilen Geräte 10 denkbar.

Wie es die Figur 1 andeutet, kann die fahrzeugseitige Empfangseinheit 20 im oder am beweglichen Teil 102 des Fahrzeuges 101 angeordnet sein. Grundsätzlich ist es aber auch denkbar, dass die fahrzeugseitige Empfangseinheit 20 im oder am mindestens einem Strukturbauteil 104 des Fahrzeuges 101 angeordnet sein kann, der bspw. benachbart zum beweglichen Teil 102 angeordnet sein kann, um eine bequeme Betätigung zu ermöglichen. Im Falle einer Fahrzeugtür als das bewegliche Teil 102 kann das Strukturbauteil 104 bspw. eine B-Säule sein, wie dies die Figur 1 schematisch andeutet.

Im Rahmen des erfindungsgemäßen Betätigungssystems 100 wird die Sensorik und ggf. Auswert- und Steuerelektronik zum Erfassen von Bewegungssequenzen S zumindest zum Teil aus dem Fahrzeug 101 ausgelagert. Hierzu wird die die Sensorik und ggf. Auswert- und Steuerelektronik des benutzerseitigen mobilen Geräts 10 verwendet. Moderne benutzerseitige mobile Geräte 10, wie z. B. Mobiltelefone, weisen vom Hause aus eine Sensorik und/oder sämtliche Auswert- und Steuerelektronik zum Erfassen von Bewegungen, die normalerweise zum Orientieren und/oder Navigieren des Benutzers C benutzt werden. Nun wird diese Sensorik dazu genutzt, um unterschiedliche Bewegungssequenzen S zu erfassen, die speziell für bestimmte Vorgänge V am beweglichen Teil 102 genutzt werden können. Der Benutzer C kann dabei das mobile Gerät 10 halten und bewegen, diese Bewegungssequenz S erfassen und entsprechend einen Vorgang V am beweglichen Teil 102 berührungslos auslösen. Somit kann das bewegliche Teil 102 einfach und bequem betätigt werden, ohne dass hierzu eines speziellen Schlüssels bedarf.

Vorteilhafterweise weisen benutzerseitige mobile Geräte 10 im Sinne der Erfindung ebenfalls vom Hause aus Sendeeinheiten 12 auf. Diese Sendeeinheiten 12 können dazu verwendet werden, die erfassten Bewegungssequenzen S an das Fahrzeug 101 zu übermitteln. Die erfassten Bewegungssequenzen S können als Rohrdaten oder als bereits ausgewertete Daten übermittelt werden.

Hierzu kann eine, bspw. kontaktlose, Kommunikationsverbindung D1 zur fahrzeugseitigen Empfangseinheit 20 aufgebaut werden. Die fahrzeugseitige Empfangseinheit 20 kann wiederum die empfangenen Daten an eine Sicherheitssystem 200 des Fahrzeuges 101 über eine weitere Kommunikationsverbindung D2, bspw. in Form einer Busverbindung, übermitteln. Das Sicherheitssystem 200 des Fahrzeuges 101 kann schließlich entsprechend der erfassten und übermittelten Bewegungssequenz S einen dazu passenden Vorgang V am beweglichen Teil 102 einleiten.

Die, insbesondere kontaktlose, Kommunikationsverbindung D1 zwischen der benutzerseitigen Sendeeinheit 12 und der fahrzeugseitigen Empfangseinheit 20 kann bspw. mithilfe der NFC bzw. RFID-Technik aufgebaut werden. Diese Technik hat einen begrenzten Abstand für eine Übertragung, sodass die Sicherheit der Übertragung gewahrt werden kann. Aber auch die BLE-Technik ist im Sinne der Erfindung für die Kommunikationsverbindung D1 zwischen der benutzerseitigen Sendeeinheit 12 und der fahrzeugseitigen Empfangseinheit 20 denkbar.

Mithilfe der benutzerseitigen Sendeeinheit 12 kann zudem ein Identifikationscode übermittelt werden, um einen berechtigten Benutzer C bei einem Sicherheitssystem 200 des Fahrzeuges 101 zu identifizieren. Dabei ist es denkbar, dass erst nachdem der Identifikationscode als gültig verifiziert wurde, der entsprechende Vorgang V am beweglichen Teil 102 eingeleitet wird.

Als Bewegungssequenzen S im Sinne der Erfindung, die am benutzerseitigen mobilen Gerät 10 erfasst werden können, sind bspw. Wischbewegungen nach links (siehe Pfeil S1) und nach rechts (siehe Pfeil S2), Rotationsbewegungen (vergleiche Pfeile S3, S4) oder dergleichen denkbar. Als bestimmte Vorgänge V im Sinne der Erfindung, die für unterschiedliche Bewegungssequenzen S vorgesehen sein können, sind insbesondere Öffnen V1, aber auch Schließen V2 sowie ggf. Entriegeln V3 und/oder Verriegeln V4 des beweglichen Teils 102 denkbar.

Da der Benutzer C ein solches mobiles Gerät 10 grundsätzlich immer dabei hat, braucht der Benutzer C keine zusätzliche Schlüssel oder ID-Geräte mit sich tragen. Der Benutzer C kann einfach und bequem das mobile Gerät 10 halten und eine bestimmte Bewegungssequenz S mit dem mobilen Gerät 10 ausführen, die zu einem bestimmten Vorgang V, wie z. B. Öffnen, einer Fahrzeugtür, führt. Vorteilhafterweise braucht der Benutzer C keine Knöpfe betätigen, um sich zu identifizieren. Somit kann eine fließende und intuitive Betätigung des beweglichen Teils 102 ermöglicht werden.

Die Figur 1 zeigt ein Beispiel einer Schiebetür als das bewegliche Teil 102. Dabei ist es denkbar, dass der Benutzer C mit einer Wischbewegung mit dem Mobiltelefon in eine erste Richtung, die bspw. der Öffnungsrichtung der Schiebetür entsprechen kann, eine Öffnung V1 der Tür bewirken kann. Mit einer Wischbewegung in eine zweite, bspw. entgegengesetzte, Richtung kann der Benutzer C bspw. bewirken, dass die Schiebetür wieder verschlossen wird.

Im Einzelnen kann der mindestens eine Bewegungssensor 11 im Sinne der Erfindung dazu ausgeführt sein, eine erste Bewegungssequenz S1, bspw. in eine erste Richtung, zu erfassen, die dazu dient, eine Öffnung A1 des beweglichen Teils 102 zu bewirken, und/oder eine zweite Bewegungssequenz S2, bspw. in eine zweite Richtung, die der ersten Richtung entgegengesetzt werden kann, zu erfassen, die dazu dient, eine Schließung A2 des beweglichen Teils 102 zu bewirken, und/oder eine dritte Bewegungssequenz S3, bspw. in eine erste Drehrichtung, zu erfassen, die dazu dient, eine Entriegelung A3 des beweglichen Teils 102 zu bewirken, und/oder eine vierte Bewegungssequenz S1, bspw. in eine zweite Drehrichtung, die der ersten Drehrichtung entgegengesetzt werden kann, zu erfassen, die dazu dient, eine Verriegelung A4 des beweglichen Teils 102 zu bewirken.

Bei einer Kofferraumklappe als das bewegliche Teil 102 im Sinne der Erfindung ist es denkbar, dass der Benutzer C ähnliche Bewegungssequenzen S mit seinem mobilen Gerät 10, bspw. Mobiltelefon, ausführen kann, um ein Öffnen V1, aber auch Schließen V2 sowie ggf. Entriegeln V3 und/oder Verriegeln V4 der Kofferraumklappe zu bewirken.

Eine Betätigung von Fahrzeuggriffen oder Außenspiegel können bspw. mit einer entsprechenden Bewegung mit dem mobilen Gerät 10 an diesen beweglichen Teilen 102 bewirkt werden.

Je nach dem beweglichen Teil 102, welches der Benutzer C betätigen möchten, kann der Benutzers C in der Nähe des beweglichen Teils 102 die mindestens eine bestimmte Bewegungssequenz S ausführen, um neben dem Erfassen der Bewegungssequenz S auch eine Kommunikation mit der entsprechenden fahrzeugseitigen Empfangseinheit 20 zu ermöglichen.

Die fahrzeugseitige Empfangseinheit 20 kann mit einer Steuervorrichtung 21 und ggf. mindestens einer fahrzeugseitigen Sensoreinheit 22 ausgeführt werden. Die Steuervorrichtung 21 kann die mindestens eine Bewegungssequenz S in Form von Rohdaten oder bereits ausgewerteten Daten empfangen und einen entsprechenden Vorgang V, wie von Benutzer C gewünscht, am beweglichen Teil 102 des Fahrzeuges 101 ansteuern.

Die fahrzeugseitige Sensoreinheit 22 kann bspw. dazu genutzt werden, eine Präsenz und/oder eine Annährung des Benutzers C zu erfassen, woraufhin die kontaktlose Kommunikationsverbindung D1 zwischen der benutzerseitigen Sendeeinheit 12 und der fahrzeugseitigen Empfangseinheit 20 aktiviert werden kann.

Sowohl die benutzerseitige Sendeeinheit 12 als auch die fahrzeugseitige Empfangseinheit 20 können als Sende- und/oder Empfangseinheiten ausgeführt sein, um zu senden und/oder zu empfangen. Vorteilhafterweise kann die Erfindung vorsehen, dass die benutzerseitige Sendeeinheit 12 als eine aktive oder passive Transpondereinheit und die fahrzeugseitige Empfangseinheit 20 als ein aktives Lesegerät für eine NFC- bzw. RFID-Kommunikation ausgeführt sein können.

Wie oben bereits erwähnt, kann die fahrzeugseitige Empfangseinheit 20 eine Steuervorrichtung 21 und/oder zumindest eine fahrzeugseitige Sensoreinheit 22, bspw. zumindest eine kapazitive Sensoreinheit 22, aufweisen. Die Steuervorrichtung 21 kann dabei zur Ansteuerung der fahrzeugseitigen Empfangseinheit 20, insbesondere der NFC-Schnittstelle, und der zumindest einen Sensoreinheit 22 ausgeführt sein.

Zudem kann die Steuervorrichtung 21 dazu ausgeführt sein, die zumindest eine fahrzeugseitige Sensoreinheit 22 zu aktivieren, um eine Annährung eines Benutzers C zu erfassen, oder wahlweise die fahrzeugseitige Empfangseinheit 20 zu aktivieren, um eine Bewegungssequenz S von der benutzerseitigen Sendeeinheit 12 zu empfangen, insbesondere dann, wenn eine Annährung eines Benutzers C durch die zumindest eine fahrzeugseitige Sensoreinheit 22 detektiert wurde. Auf diese Weise kann die Kommunikationsverbindung D1, die einen Austausch von sicherheitsrelevanten und/oder sensiblen Daten vorsehen kann, wie z. B. eines Sicherheitscodes, von dem Vorgang entkoppelt werden, der dazu dient, einen potentiellen Benutzer in der Nähe des Fahrzeuges 101 zu erkennen.

Darüber hinaus ist es denkbar, dass die Steuervorrichtung 21 dazu ausgeführt sein kann, einen gleichzeitigen Betrieb der zumindest einen Sensoreinheit 22 und der fahrzeugseitigen Empfangseinheit 20 zu detektieren und/oder zu blockieren. Wie die Figur 1 andeutet, kann die Steuervorrichtung 21 hierzu eine Schalteinheit 23 aufweisen, um zwischen einem Betrieb der zumindest einen Sensoreinheit 22 und der fahrzeugseitigen Empfangseinheit 20, umzuschalten. Die Schalteinheit 23 kann in einer ersten Stellung zur Energieversorgung der zumindest einen Sensoreinheit 22 und in einer zweiten Stellung zur Energieversorgung der fahrzeugseitigen Empfangseinheit 20 dienen.

Ferner zeigt die Figur 1, dass die fahrzeugseitige Empfangseinheit 20 die zumindest eine fahrzeugseitige Sensoreinheit 22, insbesondere die zumindest eine kapazitive Sensoreinheit 22, zumindest teilweise umfangsseitig umschließen kann. Auf diese Weise kann die fahrzeugseitige Empfangseinheit 20 eine Art Abschirmung für die kapazitive Sensoreinheit 22 bereitstellen. Die zumindest eine kapazitive Sensoreinheit 22 kann vorteilhafterweise derart bezüglich der fahrzeugseitigen Empfangseinheit 20 angeordnet sein, um Störungen durch induzierte Wirbelströme zu vermeiden oder zumindest zu reduzieren. Dabei kann die kapazitive Sensoreinheit 22 mindestens ein oder mehrere Sensorelemente aufweisen, welche bspw. rippenförmig und/oder kammförmig ausgeführt sein können.

Zum Speichern des Sicherheitscodes kann die fahrzeugseitige Empfangseinheit 20 eine nicht-flüchtige Speichereinheit 24 aufweisen.

Ein entsprechendes Verfahren zum Betätigen eines beweglichen Teils 102, insbesondere einer Tür oder einer Klappe, eines Fahrzeuges 101, stellt ebenfalls einen Aspekt der Erfindung bereit. Das Verfahren kann vorzugsweise mithilfe eines Betätigungssystems 100 durchgeführt werden, welches wie oben beschrieben ausgeführt sein kann. Das Verfahren weist dabei folgende Schritte auf:
- Bereitstellen eines benutzerseitigen mobilen Geräts 10, insbesondere in Form eines Mobiltelefons, eines Tabletts, einer Smartwatch, einer Zahlungskarte, eines Smartkleidungsstücks oder Ähnliches, mit
   mindestens einem Bewegungssensor 11, insbesondere in Form eines Beschleunigungssensors und/oder eines Gyroskops,
   wobei vorzugsweise der mindestens eine Bewegungssensor 11 zumindest ein 2D-Bewegungssensor oder ein 3D-bewegungssensor, ist,
   und einer benutzerseitigen Sendeeinheit 12,
- Erfassen mindestens einer bestimmten Bewegungssequenz S des benutzerseitigen mobilen Gerätes 10 mithilfe des mindestens einen Bewegungssensors 11 des benutzerseitigen mobilen Gerätes 10,
- Aussenden der erfassten Bewegungssequenz S durch die benutzerseitige Sendeeinheit 12 an eine fahrzeugseitige Empfangseinheit 20, insbesondere mithilfe elektromagnetischer Induktion und/oder elektromagnetischer Wellen,
- Empfangen der erfassten Bewegungssequenz S durch die fahrzeugseitige Empfangseinheit 20, insbesondere mithilfe elektromagnetischer Induktion und/oder elektromagnetischer Wellen,
- Einleiten eines bestimmten Vorganges A am beweglichen Teil 102 durch die fahrzeugseitige Empfangseinheit 20, die entsprechend der erfassten Bewegungssequenz S bestimmt wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Betätigungssystem

- 101: Fahrzeug
- 102: bewegliches Teil
- 103: Fahrzeuginnenraum
- 104: Strukturbauteil

- 200: Sicherheitssystem

- A: benutzerseitige Einheit
- 10: benutzerseitiges mobiles Gerät
- 11: Bewegungssensor
- 12: benutzerseitige Sendeeinheit

- B: fahrzeugseitige Einheit
- 20: fahrzeugseitige Empfangseinheit
- 21: Steuervorrichtung
- 22: fahrzeugseitige Sensoreinheit
- 23: Schalteinheit
- 24: Speichereinheit

- C: Benutzer

- D1: Kommunikationsverbindung
- D2: Kommunikationsverbindung

- S: Bewegungssequenz
- S1: erste Bewegungssequenz
- S2: zweite Bewegungssequenz
- S3: dritte Bewegungssequenz
- S4: vierte Bewegungssequenz

- V: Vorgang
- V1: Öffnen
- V2: Schließung
- V3: Verriegeln
- V4: Entriegeln

## Patentansprüche

1. Betätigungssystem (100) für ein bewegliches Teil (102), insbesondere eine Tür oder eine Klappe, eines Fahrzeuges (101), vorzugsweise in Form eines Zugangssystems zu einem Fahrzeuginnenraum (103) oder einem Funktionsraum oder einem Funktionselement des Fahrzeuges (101), aufweisend:
A) ein benutzerseitiges mobiles Gerät (10), insbesondere in Form eines Mobiltelefons, eines Tabletts, einer Smartwatch, einer Zahlungskarte, eines Smartkleidungsstücks oder Ähnliches, mit
mindestens einem Bewegungssensor (11), insbesondere in Form eines Beschleunigungssensors und/oder eines Gyroskops,
wobei vorzugsweise der mindestens eine Bewegungssensor (11) zumindest ein 2D-Bewegungssensor oder ein 3D-Bewegungssensor ist,
und wobei der mindestens eine Bewegungssensor (11) dazu ausgeführt ist, mindestens eine bestimmte Bewegungssequenz (S) des benutzerseitigen mobilen Gerätes (10) zu erfassen,
und einer benutzerseitigen Sendeeinheit (12),
wobei die benutzerseitige Sendeeinheit (12) dazu ausgeführt ist, die mindestens eine erfasste Bewegungssequenz (S), insbesondere mithilfe elektromagnetischer Induktion und/oder elektromagnetischer Wellen, auszusenden,
B) eine fahrzeugseitige Empfangseinheit (20),
wobei die fahrzeugseitige Empfangseinheit (20) dazu ausgeführt ist, die mindestens eine erfasste Bewegungssequenz (S), insbesondere mithilfe elektromagnetischer Induktion und/oder elektromagnetischer Wellen, zu empfangen,
und wobei die fahrzeugseitige Empfangseinheit (20) dazu ausgeführt ist, entsprechend der erfassten Bewegungssequenz (S) einen bestimmten Vorgang (V) am beweglichen Teil (102) einzuleiten.

2. Betätigungssystem (100) nach Anspruch 1,
**dadurch gekennzeichnet,**
**dass** das benutzerseitige mobile Gerät (10) ein Mobiltelefon, ein Tablett, eine Smartwatch, eine Zahlungskarte und/oder ein Smartkleidungsstück aufweist.

3. Betätigungssystem (100) nach Anspruch 1 oder 2,
**dadurch gekennzeichnet,**
**dass** das Betätigungssystem (100) zum Betätigen eines beweglichen Teils (102) des Fahrzeuges (101) in Form einer Tür, insbesondere einer Schiebetür, einer Klappe, einer Tankklappe, einer Ladesteckerklappe, einer Heckklappe, eines Außenspiegels, eines Rückspiegels, eines außenliegenden oder innenliegenden Griffes oder dergleichen ausgeführt ist.

4. Betätigungssystem (100) nach einem der vorhergehenden Ansprüche,
**dadurch gekennzeichnet,**
**dass** die fahrzeugseitige Empfangseinheit (20) im oder am beweglichen Teil (102) des Fahrzeuges (101) angeordnet ist,
oder dass die fahrzeugseitige Empfangseinheit (20) im oder am mindestens einem Strukturbauteil (104) des Fahrzeuges (101) angeordnet ist, der insbesondere benachbart zum beweglichen Teil (102) angeordnet ist.

5. Betätigungssystem (100) nach einem der vorhergehenden Ansprüche,
**dadurch gekennzeichnet,**
**dass** der mindestens eine Bewegungssensor (11) mindestens einen Beschleunigungssensor und/oder einen Gyroskop aufweist,
wobei insbesondere der Beschleunigungssensor mindestens ein piezoelektrisches Sensorelement, ein mikro-elektro-mechanisches System, einen Dehnungsmessstreifen, einen Neigungssensor, ein Schwingungssensorelement und/oder ein induktives Sensorelement, insbesondere eine LDC-Sensorelement, aufweist.

6. Betätigungssystem (100) nach einem der vorhergehenden Ansprüche,
**dadurch gekennzeichnet,**
**dass** der mindestens eine Bewegungssensor (11) dazu ausgeführt ist, eine Winkelgeschwindigkeit bzw. Rotation des benutzerseitigen mobilen Geräts (10) um mindestens 2 Achsen, vorzugsweise 3 Achsen, und/oder die Orientierung eines Benutzers (C) zu erfassen.

7. Betätigungssystem (100) nach einem der vorhergehenden Ansprüche,
**dadurch gekennzeichnet,**
**dass** der mindestens eine Bewegungssensor (11) dazu ausgeführt ist, eine erste Bewegungssequenz (S1), insbesondere in eine erste Richtung, zu erfassen, die dazu dient, eine Öffnung (V1) des beweglichen Teils (102) zu bewirken,
und/oder dass der mindestens eine Bewegungssensor (11) dazu ausgeführt ist, eine zweite Bewegungssequenz (S2), insbesondere in eine zweite Richtung, die vorzugsweise der ersten Richtung entgegengesetzt ist, zu erfassen, die dazu dient, eine Schließung (V2) des beweglichen Teils (102) zu bewirken,
und/oder dass der mindestens eine Bewegungssensor (11) dazu ausgeführt ist, eine dritte Bewegungssequenz (S3), insbesondere in Form einer Drehbewegung in eine erste Drehrichtung, zu erfassen, die dazu dient, eine Entriegelung (V3) des beweglichen Teils (102) zu bewirken,
und/oder dass der mindestens eine Bewegungssensor (11) dazu ausgeführt ist, eine vierte Bewegungssequenz (S4), insbesondere in Form einer Drehbewegung in eine zweite Drehrichtung, die vorzugsweise der ersten Drehrichtung entgegengesetzt ist, zu erfassen, die dazu dient, eine Verriegelung (V4) des beweglichen Teils (102) zu bewirken.

8. Betätigungssystem (100) nach einem der vorhergehenden Ansprüche,
**dadurch gekennzeichnet,**
**dass** die benutzerseitige Sendeeinheit (12) mindestens eine, insbesondere aktive oder passive, NFC-Schnittstelle, vorzugsweise in Form einer Transponder-Spule, und/oder eine BLE-Schnittstelle aufweist,
und/oder dass die fahrzeugseitige Empfangseinheit (20) mindestens eine, insbesondere aktive oder passive, NFC-Schnittstelle, vorzugsweise in Form eines RFID-Lesegeräts, und/oder eine BLE-Schnittstelle aufweist.

9. Betätigungssystem (100) nach einem der vorhergehenden Ansprüche,
**dadurch gekennzeichnet,**
**dass** die benutzerseitige Sendeeinheit (12) dazu ausgeführt ist, mindestens einen Sicherheitscode, einen Zugangsberechtigungscode und/oder einen Identifikationscode auszusenden,
und/oder dass die fahrzeugseitige Empfangseinheit (20) dazu ausgeführt ist, eine Kommunikationsverbindung mit einem fahrzeugseitigen Sicherheitssystem (200), einem fahrzeugseitigen Zugangsberechtigungssystem und/oder mindestens einem fahrzeugseitigen Steuergerät aufzubauen,
um einen Sicherheitscode, einen Zugangsberechtigungscode und/oder einen Identifikationscode zu überprüfen,
und um mindestens einen bestimmten Vorgang (V) am beweglichen Teil (102) einzuleiten,
insbesondere nur dann, wenn ein gültiger Sicherheitscode, ein gültiger Zugangsberechtigungscode und/oder ein gültiger Identifikationscode erkannt wurde.

10. Betätigungssystem (100) nach einem der vorhergehenden Ansprüche,
**dadurch gekennzeichnet,**
**dass** die fahrzeugseitige Empfangseinheit (20) eine Steuervorrichtung (21) und/oder zumindest eine fahrzeugseitige Sensoreinheit (22), insbesondere zumindest eine kapazitive Sensoreinheit (22), aufweist,
wobei insbesondere die Steuervorrichtung (21) zur Ansteuerung der fahrzeugseitigen Empfangseinheit (20), insbesondere der NFC-Schnittstelle, und der zumindest einen Sensoreinheit (22) ausgeführt ist.

11. Betätigungssystem (100) nach dem vorhergehenden Anspruch,
**dadurch gekennzeichnet,**
**dass** die Steuervorrichtung (21) dazu ausgeführt ist,
die zumindest eine fahrzeugseitige Sensoreinheit (22) zu aktivieren, um eine Annährung eines Benutzers (C) zu erfassen,
oder die fahrzeugseitige Empfangseinheit (20) zu aktivieren, um eine Bewegungssequenz (S) von der benutzerseitigen Sendeeinheit (12) zu empfangen, insbesondere dann, wenn eine Annährung eines Benutzers (C) durch die zumindest eine fahrzeugseitige Sensoreinheit (22) detektiert wurde.

12. Betätigungssystem (100) nach einem der vorhergehenden Ansprüche,
**dadurch gekennzeichnet,**
**dass** die Steuervorrichtung (21) dazu ausgeführt ist,
einen gleichzeitigen Betrieb der zumindest einen Sensoreinheit (22) und der fahrzeugseitigen Empfangseinheit (20) zu detektieren und/oder zu blockieren, und/oder dass die Steuervorrichtung (21) eine Schalteinheit (23) aufweist,
um zwischen einem Betrieb der zumindest einen Sensoreinheit (22) und der fahrzeugseitigen Empfangseinheit (20), umzuschalten,
wobei die Schalteinheit (23) insbesondere in der Steuervorrichtung (21) integriert ist, und/oder wobei die Schalteinheit (23) in einer ersten Stellung zur Energieversorgung der zumindest einen Sensoreinheit (22) und in einer zweiten Stellung zur Energieversorgung der fahrzeugseitigen Empfangseinheit (20) dient.

13. Betätigungssystem (100) nach einem der vorhergehenden Ansprüche,
**dadurch gekennzeichnet,**
**dass** die fahrzeugseitige Empfangseinheit (20) zumindest eine fahrzeugseitige Sensoreinheit (22), insbesondere zumindest eine kapazitive Sensoreinheit (22), zumindest teilweise umfangsseitig umschließt,
und/oder dass zumindest eine fahrzeugseitige Sensoreinheit (22), insbesondere zumindest eine kapazitive Sensoreinheit (22), derart bezüglich der fahrzeugseitigen Empfangseinheit (20) angeordnet ist, um Störungen durch induzierte Wirbelströme zu vermeiden oder zumindest zu reduzieren.

14. Betätigungssystem (100) nach einem der vorhergehenden Ansprüche,
**dadurch gekennzeichnet,**
**dass** die fahrzeugseitige Empfangseinheit (20) eine nicht-flüchtige Speichereinheit (24) aufweist, in der mindestens ein Sicherheitscode, ein Zugangsberechtigungscode und/oder ein Identifikationscode und/oder andere Daten eines berechtigten Benutzers des Fahrzeuges (101) hinterlegt sind.

15. Verfahren zum Betätigen eines beweglichen Teils (102), insbesondere einer Tür oder einer Klappe, eines Fahrzeuges (101),
vorzugsweise mithilfe eines Betätigungssystems (100) nach einem der oben genannten Ansprüche,
aufweisend folgende Schritte:
- Bereitstellen eines benutzerseitigen mobilen Geräts (10), insbesondere in Form eines Mobiltelefons, eines Tabletts, einer Smartwatch, einer Zahlungskarte, eines Smartkleidungsstücks oder Ähnliches, mit
mindestens einem Bewegungssensor (11), insbesondere in Form eines Beschleunigungssensors und/oder eines Gyroskops,
wobei vorzugsweise der mindestens eine Bewegungssensor (11) zumindest ein 2D-Bewegungssensor oder ein 3D-Bewegungssensor ist,
und einer benutzerseitigen Sendeeinheit (12),
- Erfassen mindestens einer bestimmten Bewegungssequenz (S) des benutzerseitigen mobilen Gerätes (10) mithilfe des mindestens einen Bewegungssensors (11) des benutzerseitigen mobilen Gerätes (10),
- Aussenden der erfassten Bewegungssequenz (S) durch die benutzerseitige Sendeeinheit (12) an eine fahrzeugseitige Empfangseinheit (20), insbesondere mithilfe elektromagnetischer Induktion und/oder elektromagnetischer Wellen,
- Empfangen der erfassten Bewegungssequenz (S) durch die fahrzeugseitige Empfangseinheit (20), insbesondere mithilfe elektromagnetischer Induktion und/oder elektromagnetischer Wellen,
- Einleiten eines bestimmten Vorganges (V) am beweglichen Teil (102) durch die fahrzeugseitige Empfangseinheit (20), die entsprechend der erfassten Bewegungssequenz (S) bestimmt wird.
